# EUROPÄISCHE PATENTSCHRIFT

(11) **EP 1 227 303 B1**
(45) Veröffentlichungstag und Bekanntmachung des Hinweises auf die Patenterteilung: **15.04.2015**
(21) Anmeldenummer: 02000681.3
(22) Anmeldetag: 11.01.2002
(51) Int. Cl.: G01F 1/66, G01F 15/18

(54) **Ultraschalldurchflusszähler mit einer austauschbaren Messstrecke**
Ultrasound flow meter with interchangeable measurement section
Débimètre à ultrasons avec section de mesure interchangeable

(30) Priorität: 26.01.2001 DE 10103745
(43) Veröffentlichungstag der Anmeldung: 31.07.2002
(73) Patentinhaber: Diehl Metering GmbH, 91522 Ansbach (DE)
(72) Erfinder: Sonnenberg, Hans-Michael, 90616 Neuhof (DE); Gaugler, Ulrich, 91476 Weidenbach (DE); Hauenstein, Günther, 63477 Maintal (DE); Stefke, Frank, 97258 Gollhofen (DE); Mayer, Roland, 91572 Bechhofen (DE); Messthaler, Roland, 91575 Windsbach (DE); Klass, Walter, 91522 Ansbach (DE); vom Schloss, Edgar, 90574 Roßtal (DE); Dietz, Gerhard, 91586 Lichtenau (DE)
(74) Vertreter: Stippl, Hubert

(56) Entgegenhaltungen:
- EP-A1- 0 088 235
- DE-A- 3 100 777
- DE-A- 19 605 164
- DE-A- 19 731 173
- DE-A1- 3 544 456
- DE-A1- 19 533 814
- DE-U- 20 017 613
- GB-A- 2 246 638
- US-A- 4 480 486

## Beschreibung

Die vorliegende Erfindung betrifft einen Durchflußmesser gemäß dem Oberbegriff des Anspruchs 1.

Ein derartiger Durchflußmesser ist bereits aus der EP 1 020 711 A 1 bekannt. Die Anschlußarmatur dieses Durchflußmessers ist sowohl an deren Oberseite als auch an deren Unterseite offen ausbebildet, d. h. besitzt einen zweiseitig offenen Anschlußbereich, in den eine vormontierte Meßkapsel einsetzbar ist. Die Meßstrecke liegt etwas mittig und um 90° Winkel zur Längsachse der Anschlüsse der Anschlußarmatur bzw. der damit in Verbindung stehenden Rohrleitung. Der Einlaßkanal der Meßkapsel besitzt einen geringeren Strömungsquerschnitt als der damit in Verbindung stehende Auslaß der Anschlußarmatur. Darüber hinaus wird die Strömung innerhalb der Meßkapsel bis hin zum Einlaß der Meßstrecke mehrfach umgelenkt. Daneben erfolgt die Verbindung zwischen Anschlußarmatur sowie Meßkapsel über eine konische Geometrie und ist daher konstruktiv aufwendig. Dieser Konstruktion haftet der Nachteil an, daß ein Freiraum im Mauerwerk für den die Unterseite der Anschlußarmatur überragenden Teil der Meßkapsel vorgesehen sein muß. Dies führt zu erhöhten Kosten. Darüber hinaus besteht bei einem Austausch der Meßkapsel die Gefahr, daß Mauerwerkteile über die rückseitige Öffnung in den Zwischenbereich zwischen Anschlußarmatur und Meßkapsel gelangen können und die Funktion des Durchflußmessers nachhaltig negativ beeinträchtigen.

Aus der Betriebsanleitung "Siemens Statischer Wärmezähler 2WR30" bzw. der Siemens Produktbroschüre "Statischer Wärmezähler 2WR3 in Ultraschall-Technik" ist ein Durchflußmesser mit einer ein eigenes Gehäuse aufweisenden Meßkapsel bekannt, die mit einem einseitig offenen Anschlußbereich einer Anschlußarmatur (Einrohranschlußstück) verbindbar ist. Die UltraschallMeßstrecke ist bei diesem Durchflußmesser senkrecht zur Flucht der Anschlußelemente der Anschlußarmatur angeordnet. Ein entsprechender Durchflußmesser ist auch aus der DE-A-35 44 456 bekannt.

Die DE-A-197 31 173 beschreibt einen Durchflußmesser, welcher mit seiner Meßstrecke in die Anschlußarmatur integriert ist. Die Meßkapsel ist Bestandteil der Anschlußarmatur und verfügt über kein eigenes Gehäuse. Die Meßstrecke verläuft im schrägen Winkel zum Verlauf der mit der Anschlußarmatur verbundenen Rohrleitung.

Aus der DE-A-196 05 164 ist ein Ultraschallströmungsmeßgerät bekannt, bei dem die Meßstrecke ebenfalls integraler Bestandteil der Anschlußarmatur ist. Dementsprechend sind auch die beiden Ultraschallwandler innerhalb der Anschlußarmatur positioniert.

Die DE-A-195 33 814 offenbart eine Vorrichtung zur Ultraschall-Durchflußmessung, bei der ebenfalls die Meßkapsel, ohne ein eigenes Gehäuse aufzuweisen, innerhalb der Anschlußarmatur angeordnet ist. Die Meßstrecke befindet sich zwischen der die beiden Wandler verbindenden Ringfläche auf einer Ebene, die mit der Mittellinie der beiden Anschlußelemente fluchtet.

Die Aufgabe der vorliegenden Erfindung besteht darin, den gattungsgemäßen Durchflußmesser dahingehend zu verbessern, daß seine Konstruktion und Montage einschließlich der Mauerwerksbearbeitung einfacher wird und gleichzeitig Verschmutzungen durch Mauerwerk und dergleichen während eines Austausches der Meßkapsel vermieden werden.

Diese Aufgabe wird beim gattungsgemäßen Durchflußmesser durch die Merkmale des kennzeichnenden Teils des Anspruchs 1 gelöst. Demgemäß erfolgt eine Umlenkung der Strömung bereits im Bereich der Anschlußarmatur, wobei die Anschlußarmatur einen einseitig offenen Anschlußbereich aufweist, an dem die Meßkapsel montierbar ist. Hierdurch wird lediglich ein einziger Anschlußbereich zwischen Anschlußarmatur und Meßkapsel geschaffen, so daß im rückwärtigen Bereich keine zusätzlichen Mauerausnehmungen notwendig sind. Dadurch dass die Meßstrecke in der Meßkapsel im wesentlichen parallel zum Verlauf der mit der Anschlußarmatur verbunden Rohrleitung bzw. den damit in Verbindung stehenden Anschlußelementen der Anschlußarmatur angeordnet ist, wird eine niedrige Bauhöhe der Meßkapsel gewährleistet.

Zweckmäßigerweise ist die Meßkapsel sandwichartig auf die Anschlußarmatur aufsetzbar. Zum einen erleichtert dies die Montage bzw. Demontage, zum anderen wird hierdurch die Möglichkeit geschaffen, die bereits in vorhandenen installierten Anschlußarmaturen befindlichen mechanische Zähler gegen Meßkapseln mit einer Ultraschallmeßstrecke einfach auszutauschen. Durchflußmesser auf Ultraschallmeßprinzip unterliegen einem geringeren Verschleiß, d. h. besitzen eine hohe Lebensdauer und ermöglichen es daher längere Beglaubigungsintervalle zu erzielen.

Gemäß der Erfindung sind sowohl der Einströmkanal als auch der Ausströmkanal der Meßkapsel im Bereich des einseitig offenen Anschlußbereichs vorgesehen. Hierbei können Einströmkanal und Ausströmkanal parallel, insbesondere konzentrisch zueinander angeordnet sein. Beispielsweise kann der Ausströmkanal innerhalb eines ringförmigen Einströmkanals vorgesehen. Dies ermöglicht es bei Bedarf, einen Wärmefühler zentral in den Einströmkanal, d. h. unmittelbar vor der Meßstrecke oder zentral in den Ausströmkanal, d. h. unmittelbar nach der Meßstrecke zu positionieren, wodurch eine sehr genaue Wärmemengen-Erfassung ermöglicht wird. Gleichzeitig wird die Genauigkeit der Erfassung des Laufzeitunterschieds innerhalb der Meßstrecke davon nicht beeinträchtigt.

Die vorliegende Erfindung betrifft ferner einen Durchflußmesser für fluide Medien mit einer Anschlußarmatur, einem Einlaß, einem Auslaß, einer an der Anschlußarmatur montierbaren bzw. demontierbaren Meßkapsel mit Gehäuse, Ultraschallmeßstrecke, mindestens einen mit der Meßstrecke und dem Einlaß der Anschlußarmatur in Verbindung stehenden Einströmkanal sowie mindestens einem mit der Meßstrecke und dem Auslaß der Anschlußarmatur in Verbindung stehenden Ausströmkanal bei dem der Einströmkanal der Meßkapsel zusammen mit dem Einlaß der Anschlußarmatur einen gemeinsamen Strömungskanal bilden, der - im Vertikalschnitt von Meßkapsel sowie Anschlußarmatur gesehen - im wesentlichen ohne Umlenkungen oder zumindest Umlenkungen kleiner 90° zum Einlaß der Meßstrecke führt und/oder der Ausströmkanal zusammen mit dem Auslaß einen Strömungskanal bildet, der - im Vertikalschnitt gesehen - im wesentlichen ohne Umlenkungen oder zumindest Umlenkungen kleiner 90° vom Auslaß der Meßstrecke zur Umlenkung im Auslaß führt.

Hierdurch können meßtechnische Nachteile bedingt durch undefinierte Druckverhältnisse aufgrund von Umlenkungen und dergleichen vermieden werden, d. h. die Genauigkeit der Messung erhöht werden.

Ein weiterer Aspekt der Erfindung besteht in der besonderen Dimensionierung der Strömungsquerschnitte insofern, als der Strömungsquerschnitt des Einlaufes der Anschlußarmatur kleiner oder gleich dem Strömungsquerschnitt des Einströmkanals der Meßkapsel sein soll und/oder der Strömungsquerschnitt des Ausströmkanals der Meßkapsel kleiner oder gleich dem Strömungsquerschnitt des Einlaufes der Anschlußarmatur sein soll. Hierdurch können Strömungsunterschiede sowie Einlaufturbulenzen angeglichen werden. Darüber hinaus werden Strömungsabrisse, Querströmungen sowie oszillierende Strömungen vermieden.

Gemäß einer alternativen Ausgestaltung der Erfindung ist im Einströmbereich von Anschlußarmatur zu Meßkapsel z. B. an der Verbindungsstelle der Anschlußarmatur mit der Meßkapsel eine Vergrößerung, insbesondere sprunghafte Vergrößerung des Strömungsquerschnittes vorgesehen, wodurch eine starke Reduzierung der Strömungsgeschwindigkeit erzeugt wird. Diese ermöglicht, das fluide Medium mit einer stärkeren Strömungsumlenkung in den Einströmkanal der Meßstrecke zu leiten ohne eine überproportionale Erhöhung des Druckverlustes. Die Unterschiede des Anströmprofils werden in diesem Fall durch die sprungartige Vergrößerung des Strömungsquerschnittes erzeugt.

Zweckmäßigerweise nimmt der Einströmkanal der Meßkapsel die Geometrie und/oder den Verlauf des Einlasses der Anschlußarmatur auf. Alternativ oder zusätzlich hierzu kann dies auch für den Ausströmkanal gelten.

Hierdurch wird jeweils eine optimierte Strömungsführung innerhalb der Meßstrecke erreicht; welche einerseits einen geringen Strömungswiderstand bei hohen Volumenströmen ermöglicht, andererseits die erzielbare Schallaufzeitdifferenz zwischen einem Schallstrahl mit und gegen die Strömung möglichst groß ist, dabei aber die notwendigen Gehäuseabmaße nicht überschritten werden, d. h. eine kompakte Ausbildung der Meßkapsel ermöglicht wird.

Zweckmäßigerweise ist der Durchmesser des Gehäuses der Meßkapsel, gegebenenfalls abgesehen von den Halterungen für die Wandler, kleiner oder zumindest gleich, allerdings nicht größer als der Durchmesser, der mit der Meßkapsel in Verbindung stehenden Anschlußarmatur.

Die Konstruktion ermöglicht es auch, Siebe- oder Strömungsgleichrichter im Bereich des Einströmkanals vorzusehen, wodurch starke, einbaubedingte Strömungsunterschiede und Einlaufturbulenzen in einfacher Weise ausgeglichen werden können. Dies gilt für sämtliche (auch nebengeordnete) Aspekte der Erfindung. Das Sieb kann auch Schräg gestellte Lamellen aufweisen, die der Strömung einen Impuls aufprägen, welcher in Richtung zum Einlauf der Ultraschallmeßstrecke weist.

Eine weitere zweckmäßige Ergänzung der vorliegenden Erfindung besteht darin, daß ein Wärmefühler zur Wärmemengenmessung vorgesehen ist und zwar im Bereich der Anschlußarmatur oder der Meßkapsel. Durch die besondere Konstruktion des erfindungsgemäßen Durchflußmessers ergibt sich eine wesentlich freiere Zugänglichkeit im Vergleich zu auf dem mechanischen Prinzip beruhenden Meßkapseln. Es ist jetzt möglich, den Wärmefühler entweder unmittelbar im Einströmkanal oder im Ausströmkanal der Meßkapsel, vorzugsweise im wesentlichen zentral in der Strömung, positionieren, wodurch eine besonders exakte Wärmemengenmessung bzw. Wärmeverlustmessung durchführbar wird. In letzterem Fall befindet sich der Wärmefühler entweder im Ein- oder Auslaufbereich, d. h. ist optimal positioniert.

Alternativ hierzu besteht allerdings auch die Möglichkeit, den Wärmefühler innerhalb der Meßstrecke zu positionieren und zwar derart, daß der Schall am Wärmefühler vorbeigeleitet wird, beispielsweise an diesem seitlich vorbeigeleitet wird.

Alternativ kann der Wärmefühler auch im Bereich der Schallwegstrecke positioniert sein, dann allerdings mit einem Durchmesser, der kleiner oder gleich der vierfachen Wellenlänge ist, da hierbei durch den Wärmefühler keine erheblichen Schallverluste oder Schallreflexionen eintreten.

Der Wärmefühler kann im Gehäuse der Meßkapsel - losgelöst von der Elektronik (die gegebenenfalls eichrechtlich geschützt ist, d. h. verplombt ist) - positioniert werden. Beispielsweise kann der Fühler seitlich zu der in einem verschließbaren Gehäuseteil liegenden Elektronik angeordnet sein. Die Montagestelle des Wärmefühlers kann nahezu beliebig im Bereich der Meßkapsel ausgewählt werden. Beispielsweise kann die Halterung des Wärmefühlers parallel oder in spitzem Winkel zur Längsachse der Meßkapsel, d. h. von oben in die Meßkapsel hinein verlaufend positioniert sein. Alternativ kann die Halterung des Wärmefühlers auch tangential zur Meßkapsel, d. h. tangential in die Meßkapsel hinein verlaufend angeordnet sein.

Die Meßstrecke des erfindungsgemäßen Durchflußmessers kann vorzugsweise geradelinig ausgebildet sein. Hierbei kann der Schall vom einen Ende zum anderen Ende der Meßstrecke sich linear bewegen oder aber zur Verlängerung des Schallaufweges innerhalb der linearen Meßstrecke mindestens einmal reflektiert werden.

Die Trennung von Einströmkanal zu Ausströmkanal erfolgt bei der geraden Ultraschallmeßstrecke über eine Trennebene, die vorzugsweise schief, geradlinig oder gewölbt ausgebildet sein kann. Diese schiefe Ebene gewährleistet es auch, daß das Wasser über den Ausströmkanal in den Auslaß der Meßstrecke gelangen kann.

Der Einströmkanal ist zweckmäßigerweise ringförmig ausgebildet.

Nachstehend werden anhand der Zeichnungsfiguren mehrere zweckmäßige Ausgestaltungen der vorliegenden Erfindung näher erläutert. Wiederkehrende Merkmale sind der Übersichtlichkeit halber lediglich einmal bei allen Ausführungsformen mit identischen Bezugszeichen gekennzeichnet. Es zeigen:
- Fig. 1: eine perspektivische Ansicht einer Ausgestaltung des erfindungsgemäßen Durchflußmessers mit an der Oberseite installiertem Wärmefühlereinsatz sowie mit linearer Meßstrecke;
- Fig. 2: eine Schnittdarstellung der Anordnung gemäß Fig. 1 in Längsrichtung zu den Anschlußelementen der Rohrleitung;
- Fig. 3: eine Schnittdarstellung in Querrichtung zur Achse der Anschlußelemente der Rohrleitung;
- Fig. 4: eine Ausgestaltung des Durchflußmessers, die nicht Teil der Erfindung ist, mit an der Oberseite der Meßkapsel mittig angebrachtem Wärmefühlereinsatz sowie einer Wirbelkammer als Meßstrecke;
- Fig. 5: die Anordnung gemäß Fig. 4 in Draufsicht;
- Fig. 6: die Anordnung gemäß den Figuren 4 und 5 im Längsschnitt entlang der Achse der Anschlußelemente bzw. Rohrleitung;
- Fig. 7: die Darstellung eines Schnitts durch die Wirbelkammer der Anordnung gemäß den Figuren 4-6;
- Fig. 8: eine Ausgestaltung des Durchflußmessers, die nicht Teil der Erfindung ist, mit seitlich tantential zur Meßkapsel angeordnet und Wärmefühlereinsatz sowie eine Wirbelkammer als Meßstrecke in Seitenansicht;
- Fig. 9: eine Draufsicht auf die Ausgestaltung gemäß Fig. 8;
- Fig. 10: einen Teilschnitt gemäß der Linie C - C von Fig. 9;
- Fig. 11: einen Schnitt A - A gemäß der Darstellung nach Fig. 9 sowie
- Fig. 12: eine Schnittdarstellung entsprechend der Ebene E - E in Fig. 8.

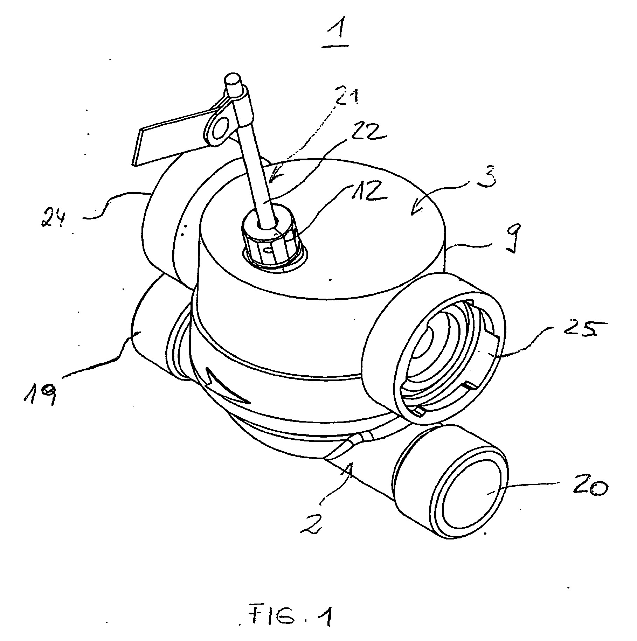

Bezugsziffer 1 in Fig. 1 kennzeichnet eine zweckmäßige Ausgestaltung des erfindungsgemäßen Durchflußmessers in seiner Gesamtheit. Der Durchflußmesser umfaßt eine Anschlußarmatur 2, die über Anschlußelemente 19, 20 mit einer (nicht dargestellten) Rohrleitung zum Beispiel Wasserrohrleitung verbindbar ist. Die Anschlußarmatur trägt an ihrer Oberseite sozusagen in sandwichförmiger Anordnung eine Meßkapsel 3 mit gegenüberliegenden Aufnahmen 24, 25 für (nicht dargestellte) Meß-Funktionsteile zum Beispiel Ultraschallwandler. Es handelt sich hierbei um eine geradelinige Ultraschallmeßstrecke.

Der Durchflußmesser 1 gemäß Fig. 1 besitzt des weiteren einen Wärmefühlereinsatz 21, der im Bereich der Oberseite des Gehäuses 9 der Meßkapsel 3 über eine Halterung 12 sowie ein Kabel 22 einen in Fig. 1 nicht dargestellten Wärmefühler im Inneren der Meßkapsel 3 plaziert.

Es wird darauf hingewiesen, daß - falls keine Wärmemessung gewünscht ist oder notwendig sein sollte - der Wärmefühlereinsatz 21 ebensogut entfallen kann.

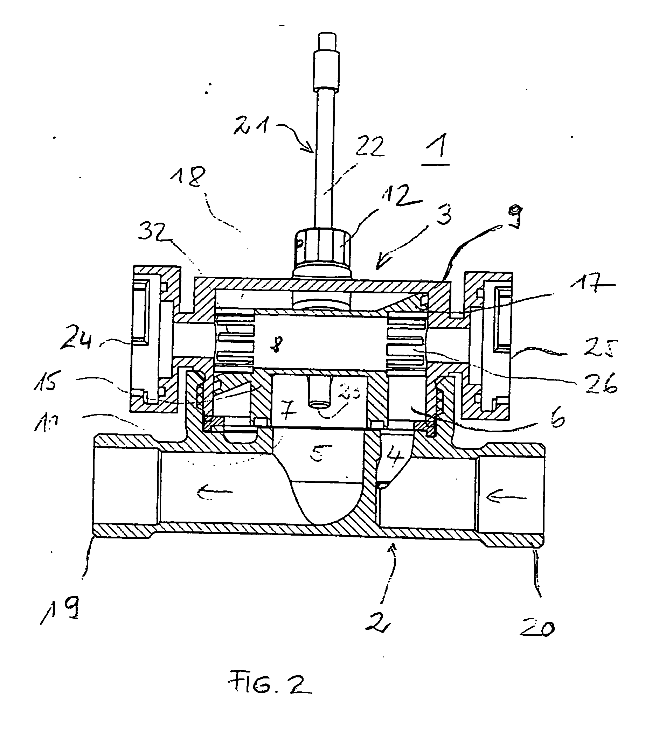

Aus der Fig. 2 ergibt sich, daß das Gehäuse 9 der Meßkapsel 3 den unmittelbar mit der Meßkapsel 3 angrenzenden Bereich der Anschlußarmatur 2 - bis auf die Aufnahmen 24, 25 nicht seitlich übe rragt.

Die Aufnahmen 24, 25 können alternativ zur in Fig. 1 und 2 dargestellten Ausfertigungsform auch innerhalb des Gehäuses 9 der Meßkapsel 3 angeordnet sein und zwar vorzugsweise derart, daß sie die angrenzenden Anschlußarmatur nicht oder zumindest nicht wesentlich überragen. Daraus resultiert eine sehr einfache Montier- und Demontierbarkeit bei installiertem Anschlußgehäuse.

Gemäß Fig. 2 ist an der Oberseite der Anschlußarmatur 2 ein einseitig offener Anschlußbereich 10 vorgesehen, der mit der offenen Unterseite der Meßkapsel 3 kommuniziert.

Die Meßkapsel 3 sowie Anschlußarmatur 2 werden über entsprechende ineinandergreifende Ringvorsprünge miteinander verbunden, vorzugsweise verschraubt. Daneben ist in diesem Bereich eine Dichtung vorgesehen.

Im Inneren der Meßkapsel 3 befindet sich eine Ultraschallmeßstrecke 8, die in der Ausgestaltung des Durchflußmessers gemäß Fig. 2 geradelinig ausgebildet ist. Die Meßkapsel 3 umfaßt einen die Meßstrecke 8 bildenden Einsatz 15, welcher zusammen mit dem Gehäuse 9 der Meßkapsel 3 einen Einströmkanal 6 in Form eines Ringraums bildet. Dieser Einströmkanal 6 steht mit einem Einlauf der Meßstrecke 8, z. B. wie in Fig. 2 dargestellte Form einer Mehrzahl von Einlaßöffnungen 26 in Verbindung. Am gegenüberliegenden Ende der Meßstrecke 8 befindet sich ein Auslauf, z. B. in Form einer Mehrzahl von Auslauföffnungen 32 der mit einer durch eine schiefen Ebene 17 gebildeten, abgetrennten und mit einem mittigen Ausströmkanal 7 verbundenen Raum 18 kommuniziert. Die Ultraschallmeßstrecke 8 ist der Strömungsbereich der Meßkapsel, in dem das Ultraschallsignal geführt wird.

Der Ausströmkanal 7 geht in einen Auslaß 5 der Anschlußarmatur 2 über, wobei das Wasser im Bereich des Auslasses der Anschlußarmatur 2 umgeleitet und der Wasserleitung wieder zugeführt wird.

Der Einlaß 4 im umgelenkten Teil der Anschlußarmatur 2 ist ebenfalls bereits ringförmig oder zumindest teilringförmig ausgebildet und geht über den Anschlußbereich 10 in seiner Verlängerung in den ebenfalls ringförmig ausgebildeten Einströmkanal 6 der Meßkapsel 3 über und zwar ohne einer wesentlichen Richtungsänderung des Einströmkanals.

Der Querschnitt des Einströmkanals 6 ist zweckmäßigerweise größer oder gleich dem Querschnitt des Einlasses 4 ausgebildet, wodurch Strömungsunterschiede sowie Einlaufturbulenzen vermieden werden können.

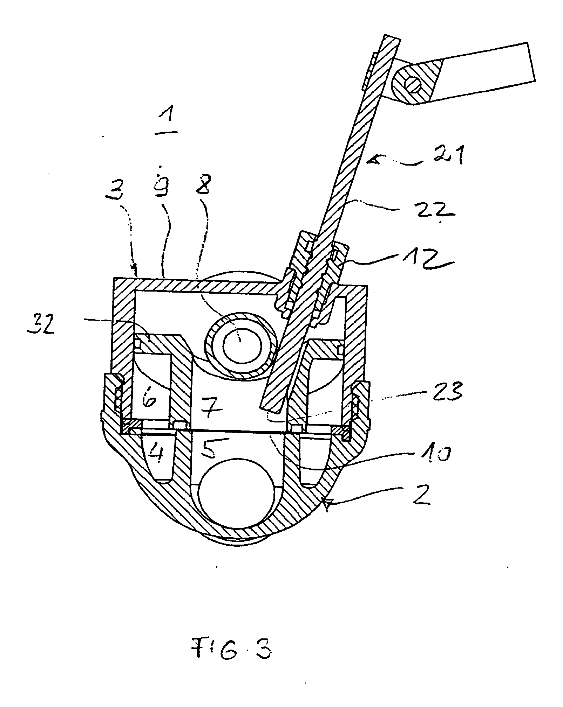

Im Bereich des Einlasses 4 der Anschlußarmatur 2 oder im Bereich des Einströmkanals 6 der Meßkapsel 3 können mit zusätzlichen (in den Figuren 2 und 3) nicht dargestellten Funktionselementen wie z. B. Sieben und/oder Strömungsgleichrichtern Strömungsunterschiede und Einlaufturbulenzen ausgeglichen werden.

Gemäß Fig. 2 befindet sich am vorderen Ende der Halterung 12 des Wärmefühlereinsatzes 21 der Wärmefühler 23 und zwar im Zentralbereich des mittigen Ausströmkanals 7. Mit Bezugsziffer 22 ist ein Kabel bezeichnet. Gemäß Fig. 1 ist der Wärmefühlereinsatz 21 zur Oberseite der Meßkapsel 3 leicht schräg verlaufend installiert, um - an der Meßstrecke 8 vorbei - den Wärmefühler 23 zentral im Auströmkanal 7 zu plazieren.

Der Strömungsquerschnitt des Ausströmkanals 7 entspricht in etwa dem Strömungsquerschnitt des Auslasses 5 der Anschlußarmatur 2, um unerwünschte Drucke aufgrund eines Strömungsstaus im Abflußbereich zu verhindern.

Desweiteren ist der Strömungsquerschnitt des Einströmkanals 6 größer als der Strömungsquerschnitt der Meßstrecke 8.

Wie aus Fig. 3 deutlich wird, komplettiert der Einsatz der Meßkapsel 3 bzw. dessen Gehäuse den Ein- bzw. Abströmbereich zu und von der Meßstrecke 8 derart, daß jeweils ein hinsichtlich Strömungsquerschnitt sowie -verlauf angepaßter Gesamtkanal ohne daß es zu einer Umlenkung der Flüssigkeit vor Eintritt in die Meßstrecke 8 gebildet wird, kommt.

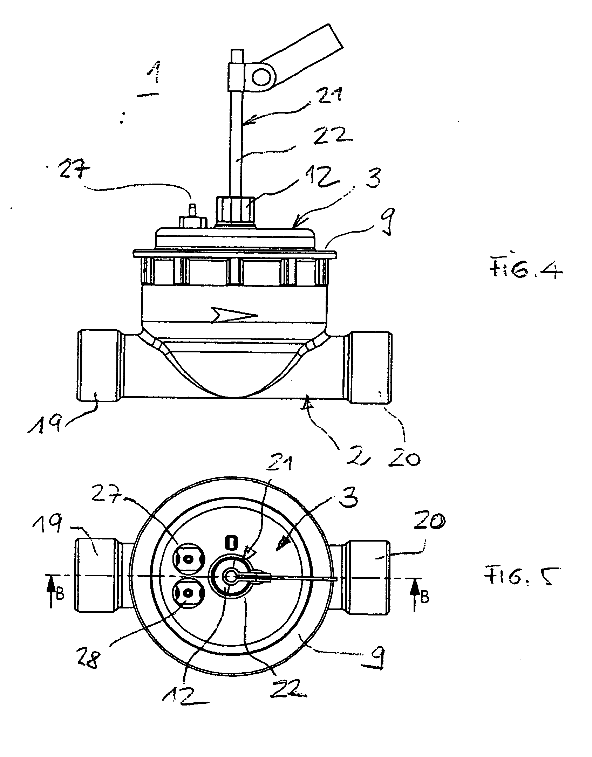

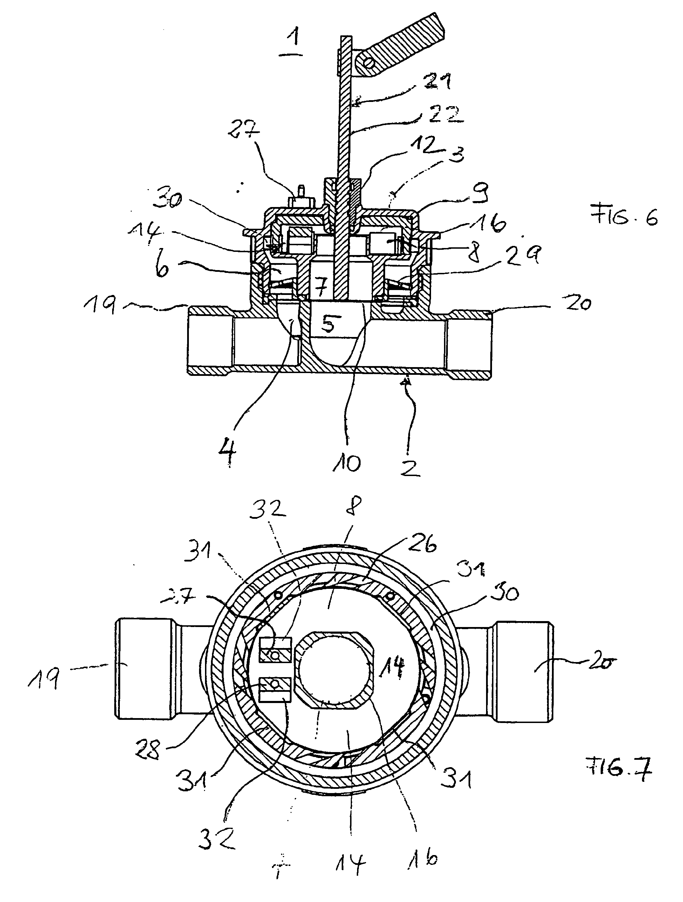

Fig. 4 zeigt eine Ausgestaltung des Durchflußmessers, die nicht Teil der Erfindung ist. In der Ausgestaltung der Fig. 4 wird bei der anstelle einer linearen Meßstrecke eine gekrümmte Meßstrecke in Form einer Wirbelkammer 14 verwendet wird. Hierbei ist insbesondere aus den Fig. 4 und 6 ersichtlich, daß die Meßkapsel 3 mit ihrem Gehäuse 9 die äußeren Dimensionen des Anschlußgehäuses 2 nicht oder zumindest nur unwesentlich überragt. Mit Bezugsziffern 27 und 28 sind Wandler gekennzeichnet, vgl. Fig. 5 und 7, die sich an der Oberseite der durch die Wirbelkammer 14 gebildeten Meßstrecke 8 befinden. Eine Umlenkung der Ultraschallsignale ausgehend von der Vertikalen in die Horizontale wird mittels mit dem Wandler 27, 28 in Verbindung stehenden Reflektoren 32 erzielt wird, wobei die Reflektoren 32 Ultraschallsignale von Wandlern innerhalb der Wirbelkammer an ringförmig angeordnete Reflektoren 31 weitergeben, so daß die von dem einen Wandler abgesandten Ultraschallsignale über die Reflektoren 32, 31 durch die Meßstrecke 8 zum gegenüberliegenden Wandler geleitet werden.

Der Wärmefühlereinsatz 21 kann hierbei vorteilhaft zentral im Bereich des Ausströmkanals 7 positioniert sein.

Auch hier ist - wie bei der vorerwähnten Ausgestaltung des Durchflußmessers mit linearer Meßstrecke 8 - ein ringförmiger Fortsatz des Einlasses 4 der Anschlußarmatur 2 durch den Einströmkanal 6 der Meßkapsel 3 gegeben. Wie aus Fig. 6 deutlich wird, ist im Bereich des Einströmkanals 6 zusätzlich ein Sieb 29 über den gesamten Umfang des Einströmkanals 6 verlaufend angeordnet.

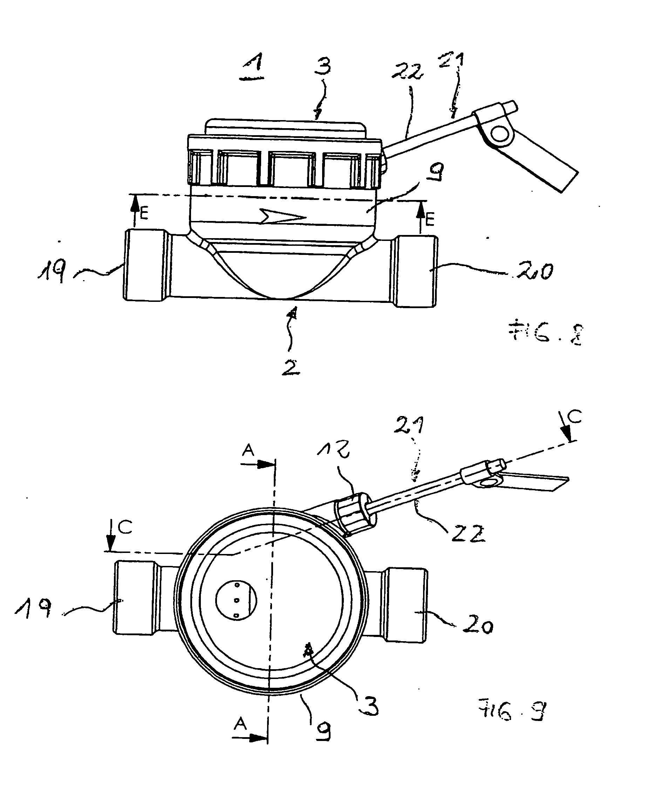

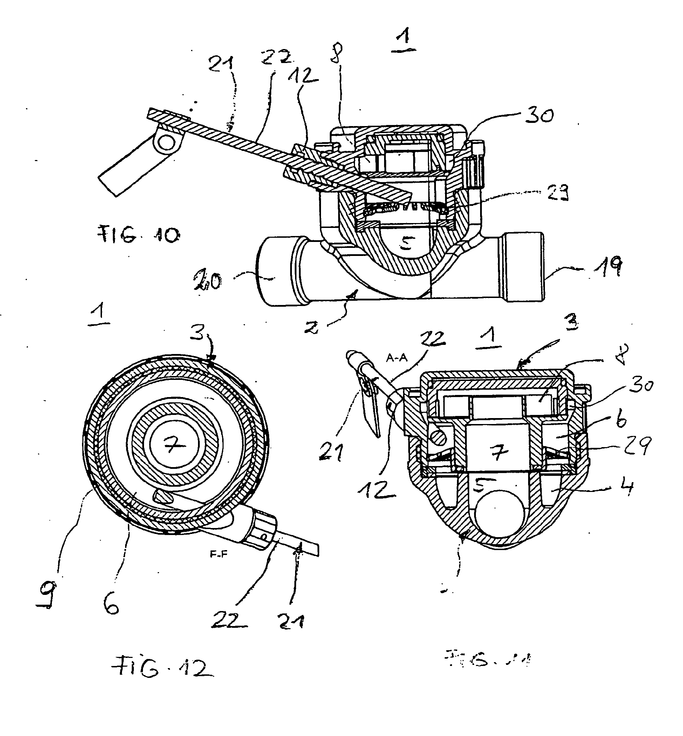

Der Wärmefühlereinsatz 21 kann ebensogut auch - wie dies in den Figuren 8 - 11 dargestellt ist, im Bereich des ringförmigen Einströmkanals 6 der Meßkapsel 3 positioniert werden.

Hierbei wird die Halterung 12 des Wärmefühlereinsatzes 21 über eine im Seitenbereich des Gehäuses 9 der Meßkapsel 3 vorgesehene Öffnung tangential in den Einströmkanal 6 eingeführt.

Der erfindungsgemäße Durchschlußmesser ermöglicht den Einsatz herkömmlicher Anschlußarmaturen für mechanische Zähler und damit den Austausch bereits bestehender mechanischer Zähler durch Meßkapseln mit physikalischen Meßstrecken insbesondere Ultraschallmeßstrecken. Darüber hinaus kann der Durchflußmesser aufgrund seiner Konstruktion einfach und ohne der Gefahr, daß Verschmutzungen in das Innere der Anschlußarmatur bzw. Meßkammer gelangen, ausgetauscht werden. Darüber hinaus kann ein Meßfühler aufgrund der besonderen Konstruktion problemlos unmittelbar vor oder nach der Meßstrecke oder sogar innerhalb der Meßstrecke positioniert werden. Die Erfindung stellt daher einen ganz besonderen Beitrag auf dem einschlägigen technischen Gebiet dar.

## Patentansprüche

1. Durchflußmesser für fluide Medien mit
einer Anschlußarmatur (2) umfassend
einen Einlaß (4),
einen Auslaß (5),
Anschlußelemente (19, 20) zur Verbindung der Anschlußarmatur (2) mit einer Rohrleitung,
einer Meßkapsel (3) mit
einer Ultraschallmeßstrecke (8),
mindestens einem mit der Ultraschallmeßstrecke (8) und dem Einlaß (4) der Anschlußarmatur (2) in Verbindung stehenden Einströmkanal (6) sowie
mindestens einem mit der Meßstrecke (8) und dem Auslaß (5) der Anschlußarmatur (2) in Verbindung stehenden Ausströmkanal (7), wobei
die Anschlußarmatur (2) einen Anschlußbereich (10) aufweist, an dem die Messkapsel (3) montiert ist,
sich an dem einseitig offenen Anschlußbereich (10) sowohl der Einströmkanal (6) als auch der Ausströmkanal (7) befinden und
eine Umlenkung der Strömung im Bereich der Anschlußarmatur (2) erfolgt,
die Meßkapsel (3) ein Gehäuse (9) aufweist,
**dadurch gekennzeichnet, daß**
die Anschlußarmatur (2) eine Oberseite aufweist, an der ein einseitig offener Anschlußbereich (10) vorgesehen ist, der mit einer offenen Unterseite der Messkapsel (3) kommuniziert,
der Einlaß (4) im umgelenkten Teil der Anschlußarmatur (2) ringförmig oder zumindest teilringförmig ausgebildet ist und über den Anschlußbereich (10) in seiner Verlängerung in einen ebenfalls ringförmig ausgebildeten Einströmkanal (6) der Meßkapsel (3) übergeht,
der Ausströmkanal (7) der Meßkapsel (3) sich innerhalb des ringförmigen Einströmkanals (6) befindet, so dass der Einströmkanal (6) und der Ausströmkanal (7) konzentrisch zueinander angeordnet sind, und
die Ultraschallmeßstrecke (8) im wesentlichen parallel zum Verlauf der mit der Anschlußarmatur (2) verbundenen Rohrleitung angeordnet ist.

2. Durchflußmesser nach Anspruch 1,
**dadurch gekennzeichnet, daß**
der Einströmkanal (6) der Meßkapsel (3) zusammen mit dem Einlaß (4) der Anschlußarmatur (2) einen Strömungskanal bildet, der - im Vertikalschnitt gesehen - im wesentlichen ohne Umlenkungen oder zumindest Umlenkungen kleiner 90° zum Einlaß der Meßstrecke führt und/oder der Ausströmkanal (7) zusammen mit dem Auslaß (5) einen Strömungskanal bildet, der - im Vertikalschnitt gesehen - im wesentlichen ohne Umlenkungen oder zumindest Umlenkungen kleiner 90° vom Auslaß der Meßstrecke zur Umlenkung im Auslaß (5) führt.

3. Durchflußmesser nach Anspruch 1 oder 2,
**dadurch gekennzeichnet, daß**
der Strömungsquerschnitt des Einlaufes (4) der Anschlußarmatur (2) kleiner oder gleich dem Strömungsquerschnitt des Einströmkanals (6) der Meßkapsel (3) ist und/oder der Strömungsquerschnitt des Ausströmkanals (7) der Meßkapsel (3) kleiner oder gleich dem Strömungsquerschnitt des Einlaufes (4) der Anschlußarmatur (2) ist.

4. Durchflußmesser nach einem der vorhergehenden Ansprüche,
**dadurch gekennzeichnet, daß**
der Einströmkanal (6) der Meßkapsel (3) die Geometrie und/oder den Verlauf des Einlasses (4) der Anschlußarmatur (2) und/oder der Ausströmkanal (7) der Meßkapsel (3) die Geometrie und/oder der Verlauf des Auslasses (5) der Anschlußarmatur (2) aufnimmt.

5. Durchflußmesser nach einem der vorhergehenden Ansprüche,
**dadurch gekennzeichnet, daß**
ein Wärmefühler (23) im Bereich der Anschlußarmatur (2) oder der Meßkapsel (3) vorgesehen ist, vorzugsweise im Einströmkanal (6) oder Ausströmkanal (7), dort jeweils vorzugsweise im wesentlichen zentral in der Strömung positioniert ist.

6. Durchflußmesser nach Anspruch 5,
**dadurch gekennzeichnet, daß** der Wärmefühler (23) innerhalb der Meßstrecke (8) angeordnet ist und zwar insbesondere derart, daß der Schall am Wärmefühler (23) vorbei, insbesondere seitlich an diesem vorbei geleitet wird.

7. Durchflußmesser nach einem der Ansprüche 5 oder 6,
**dadurch gekennzeichnet, daß**
der Wärmefühler (23) eine Halterung (12) aufweist, die parallel oder in spitzem Winkel zur Längsachse der Meßkapsel (3) positioniert ist.

8. Durchflußmesser nach einem der Ansprüche 5-7,
**dadurch gekennzeichnet, daß**
neben dem Wärmefühler (23) ein weiterer externer Wärmefühler vorgesehen ist und sich den Einbaubedingungen in bezug auf die Position innerhalb der Strömung gleichen.

9. Durchflußmesser nach Anspruch 1,
**dadurch gekennzeichnet, daß**
der Auslaß der Meßstrecke (8) über einen von der schiefen Ebene (17) teilbegrenzten Raum (18) mit dem Ausströmkanal (7) in Verbindung steht.

## Claims

1. Ultrasound flow meter for fluid media, having a connecting fitting (2) comprising
an inlet (4),
an outlet (5),
connecting elements (19, 20) for connecting the connecting fitting (2) to a pipeline,
a measuring cell (3) having
an ultrasound measurement section (8),
at least one inlet duct (6) connected to the ultrasound measurement section (8) and the inlet (4) of the connecting fitting (2) and
at least one outlet duct (7) connected to the measurement section (8) and the outlet (5) of the connecting fitting (2),
the connecting fitting (2) having a connecting region (10) on which the measuring cell (3) is mounted, being located on the connecting region (10), which is open on one side, both of the inlet duct (6) and of the outlet duct (7), and
the flow being deflected in the area of the connecting fitting (2),
the measuring cell (3) having a housing (9), **characterized in that**
the connecting fitting (2) has an upper side, on which there is provided a connecting region (10) that is open on one side and communicates with an open underside of the measuring cell (3),
the inlet (4) in the deflected part of the connecting fitting (2) being annular or at least partly angular and, via the connecting region (10), merging in its extension into a likewise annular inlet duct (6) of the measuring cell (3), the outlet duct (7) of the measuring cell (3) being located within the annular inlet duct (6), so that the inlet duct (6) and the outlet duct (7) are arranged concentrically with respect to each other, and
the ultrasound measurement section (8) being arranged substantially parallel to the course of the pipeline connected to the connecting fitting (2).

2. Flow meter according to Claim 1,
**characterized in that**
the inlet duct (6) of the measuring cell (3), together with the inlet (4) of the connecting fitting (2), forms a flow duct which - seen in vertical section - leads substantially without deflections or at least with deflections less than 90° to the inlet of the measurement section, and/or the outlet duct (7), together with the outlet (5), forms a flow duct which - seen in vertical section - leads substantially without deflections or at least with deflections less than 90° from the outlet of the measurement section to the deflection in the outlet (5).

3. Flow meter according to Claim 1 or 2,
**characterized in that**
the flow cross section of the inlet (4) of the connecting fitting (2) is smaller than or equal to the flow cross section of the inlet duct (6) of the measuring cell (3), and/or the flow cross section of the outlet duct (7) of the measuring cell (3) is smaller than or equal to the flow cross section of the inlet (4) of the connecting fitting (2).

4. Flow meter according to one of the preceding claims,
**characterized in that**
the inlet duct (6) of the measuring cell (3) assumes the geometry and/or the course of the inlet (4) of the connecting fitting (2), and/or the outlet duct (7) of the measuring cell (3) assumes the geometry and/or the course of the outlet (5) of the connecting fitting (2).

5. Flow meter according to one of the preceding claims,
**characterized in that**
a heat sensor (23) is provided in the area of the connecting fitting (2) or the measuring cell (3), preferably in the inlet duct (6) or outlet duct (7), respectively preferably being positioned substantially centrally in the flow there.

6. Flow meter according to Claim 5,
**characterized in that**
the heat sensor (23) is arranged within the measurement section (8), specifically in such a way that the sound is led past the heat sensor (23), particularly laterally past the latter.

7. Flow meter according to either of Claims 5 and 6,
**characterized in that**
the heat sensor (23) has a holder (12), which is positioned parallel to or at an acute angle to the longitudinal axis of the measuring cell (3).

8. Flow meter according to one of Claims 5-7,
**characterized in that**
in addition to the heat sensor (23), a further external heat sensor is provided and the installation conditions thereof are identical in relation to the position within the flow.

9. Flow meter according to Claim 1,
**characterized in that**
the outlet of the measurement section (8) is connected to the outlet duct (7) via a space (18) partly delimited by an inclined plane (17).

## Revendications

1. Débitmètre pour milieux fluides comprenant une garniture de raccordement (2) comportant
une entrée (4),
une sortie (5),
des éléments de raccordement (19, 20) pour la liaison de la garniture de raccordement (2) à une conduite tubulaire,
une capsule de mesure (3) comprenant
une section de mesure par ultrasons (8),
au moins un canal d'écoulement d'entrée (6) en liaison avec la section de mesure par ultrasons (8) et l'entrée (4) de la garniture de raccordement (2)
ainsi qu'au moins un canal d'écoulement de sortie (7) en liaison avec la section de mesure (8) et la sortie (5) de la garniture de raccordement (2),
la garniture de raccordement (2) comprenant une région de raccordement (10) sur laquelle est montée la capsule de mesure (3),
à la fois le canal d'écoulement d'entrée (6) et le canal d'écoulement de sortie (7) se trouvant au niveau de la région de raccordement (10) ouverte d'un côté et
une déviation de l'écoulement ayant lieu dans la région de la garniture de raccordement (2),
la capsule de mesure (3) comprenant un boîtier (9),
**caractérisé en ce que**
la garniture de raccordement (2) comprend un côté supérieur sur lequel est prévue une région de raccordement (10) ouverte d'un côté, laquelle communique avec un côté inférieur ouvert de la capsule de mesure (3),
l'entrée (4) est réalisée sous forme annulaire ou au moins sous forme partiellement annulaire dans la partie déviée de la garniture de raccordement (2) et se prolonge par le biais de la région de raccordement (10), dans son prolongement, par un canal d'écoulement d'entrée (6), réalisé également sous forme annulaire, de la capsule de mesure (3),
le canal d'écoulement de sortie (7) de la capsule de mesure (3) se trouve à l'intérieur du canal d'écoulement d'entrée annulaire (6), de telle sorte que le canal d'écoulement d'entrée (6) et le canal d'écoulement de sortie (7) soient disposés de manière concentrique l'un par rapport à l'autre, et
la section de mesure par ultrasons (8) est disposée essentiellement parallèlement à l'étendue de la conduite tubulaire reliée à la garniture de raccordement (2).

2. Débitmètre selon la revendication 1,
**caractérisé en ce que**
le canal d'écoulement d'entrée (6) de la capsule de mesure (3) forme, conjointement avec l'entrée (4) de la garniture de raccordement (2), un canal d'écoulement qui, vu en coupe verticale, mène jusqu'à l'entrée de la section de mesure essentiellement sans déviations ou au moins sans déviations inférieures à 90° et/ou le canal d'écoulement de sortie (7) forme, conjointement avec la sortie (5), un canal d'écoulement qui, vu en coupe verticale, mène de la sortie de la section de mesure jusqu'à la déviation dans la sortie (5) essentiellement sans déviations ou au moins sans déviations inférieures à 90°.

3. Débitmètre selon la revendication 1 ou 2,
**caractérisé en ce que**
la section transversale d'écoulement de l'entrée (4) de la garniture de raccordement (2) est inférieure ou égale à la section transversale d'écoulement du canal d'écoulement d'entrée (6) de la capsule de mesure (3) et/ou la section transversale d'écoulement du canal d'écoulement de sortie (7) de la capsule de mesure (3) est inférieure ou égale à la section transversale d'écoulement de l'entrée (4) de la garniture de raccordement (2).

4. Débitmètre selon l'une quelconque des revendications précédentes,
**caractérisé en ce que**
le canal d'écoulement d'entrée (6) de la capsule de mesure (3) reçoit la géométrie et/ou l'allure de l'entrée (4) de la garniture de raccordement (2) et/ou le canal d'écoulement de sortie (7) de la capsule de mesure (3) reçoit la géométrie et/ou l'allure de la sortie (5) de la garniture de raccordement (2).

5. Débitmètre selon l'une quelconque des revendications précédentes,
**caractérisé en ce**
**qu'**un capteur thermique (23) est prévu dans la région de la garniture de raccordement (2) ou de la capsule de mesure (3), de préférence dans le canal d'écoulement d'entrée (6) ou le canal d'écoulement de sortie (7), et y est de préférence positionné à chaque fois de manière essentiellement centrale dans l'écoulement.

6. Débitmètre selon la revendication 5,
**caractérisé en ce que**
le capteur thermique (23) est disposé à l'intérieur de la section de mesure (8), et ce en particulier de telle sorte que le son soit guidé devant le capteur thermique (23), en particulier latéralement devant celui-ci.

7. Débitmètre selon l'une quelconque des revendications 5 et 6,
**caractérisé en ce que**
le capteur thermique (23) comprend un support (12) qui est positionné parallèlement à l'axe longitudinal de la capsule de mesure (3) ou suivant un angle aigu par rapport à celui-ci.

8. Débitmètre selon l'une quelconque des revendications 5 à 7,
**caractérisé en ce**
**qu'**en plus du capteur thermique (23), un capteur thermique externe supplémentaire est prévu, et les conditions de montage sont identiques en ce qui concerne la position à l'intérieur de l'écoulement.

9. Débitmètre selon la revendication 1,
**caractérisé en ce que**
la sortie de la section de mesure (8) est en liaison avec le canal d'écoulement de sortie (7) par le biais d'un espace (18) limité partiellement par un plan incliné (17).
